Europäisches Patentamt

European Patent Office

Office européen des brevets

(11) Numéro de publication: **0 243 216**
B1

(12) **FASCICULE DE BREVET EUROPEEN**

(45) Date de publication du fascicule du brevet:
04.07.90

(21) Numéro de dépôt: 87400482.3

(22) Date de dépôt: 05.03.87

(51) Int. Cl.⁵: **F16L 33/00, B29C 45/14,**
B29C 65/68

(54) **Dispositif de branchement et/ou de raccordement pour canalisations souples.**

(30) Priorité: **20.03.86 FR 8603972**

(43) Date de publication de la demande:
**28.10.87 Bulletin 87/44**

(45) Mention de la délivrance du brevet:
**04.07.90 Bulletin 90/27**

(84) Etats contractants désignés:
**AT BE CH DE ES FR GB GR IT LI LU NL SE**

(56) Documents cités:
**EP-A- 0 110 102**
**DE-C- 3 430 053**
**FR-A- 1 488 316**
**FR-A- 2 562 986**
**US-A- 4 457 542**

(73) Titulaire: **CAOUTCHOUC MANUFACTURE ET**
**PLASTIQUES, 143bis, rue Yves le Coz,**
**F-78005 Versailles(FR)**

(72) Inventeur: **Matte, Pierre, 36, rue des Chauvelles,**
**F-58000 Nevers(FR)**
Inventeur: **Buffy, François, 1,Place**
**du 8 mai 1945,Cressely-Magny-Les,**
**Hameaux,78470 St-Remy-Les-Chevreuses(FR)**

## Description

L'invention est relative aux circuits de fluide de toute installation comportant des canalisations souples qui nécessitent des raccordements, des dérivations ou des dispositifs de purge et, en particulier, aux circuits d'échange thermique montés sur des véhicules automobiles ou routiers.

Lesdits circuits de fluide sont destinés à la liaison de différents matériels - ou organes de moteur dans le cas des véhicules - et doivent présenter, simultanément, des caractéristiques de longévité, - malgré l'environnement hostile dû à la température, à la pression, à la présence de graisses ou d'huile -, de résistance chimique aux fluides véhiculés et d'étanchéité.

La liaison entre les matériels ou organes différents implique que les canalisations souples comportent un certain nombre de raccordements, le plus souvent sur des embouts rigides, généralement métalliques, ainsi que des dérivations dont les diamètres peuvent être égaux à celui de la canalisation principale ou différents.

Alors que les canalisations souples présentent une grande fiabilité grâce à la nature du (ou des) matériau(x) élastomérique(s) constitutif(s) qui comporte(nt), généralement des éléments de renforcement, continus ou discontinus, constitués de matériaux textiles ou métalliques, les zones de raccordement aux matériels ou organes et celles de raccordement des dérivations ou des dispositifs de purge sur la tubulure principale représentent des points faibles où peuvent se produire des fuites ou même des déconnexions provoquées par l'arrachement, sous l'effet de la pression et de la température ou simplement par le fluage des mélanges à base d'élastomères dans ces conditions hostiles.

Pour pallier ces risques, des solutions diverses ont été proposées. Certaines, purement mécaniques, telles que celles décrites dans les brevets EP-A 88.571 ou DE-C 3.430.053, concernent l'insertion, dans la canalisation souple, d'une tubulure rigide, généralement métallique, à embase évasée, fixée par un moyen quelconque.

D'autres solutions s'efforcent de prévenir les risques de fuites ou de déconnexion éventuels par un surmoulage, à base de caoutchouc ou de résine synthétique, comme proposé dans les brevets FR-A 2 506 892, FR-A 2 562 986 ou EP-A 0 110 102.

Les solutions existantes présentent un grand nombre d'inconvénients:

– elles affaiblissent la résistance intrinsèque de la canalisation souple principale, en nécessitant un perçage de la paroi qui réduit la section des matériaux qui seront soumis à des sollicitations mécaniques ou détruit, localement, le renforcement de ladite paroi; de plus, ce perçage induit, sur les arêtes du trou ainsi pratiqué, des amorces de déchirure dans une zone qui, en service, sera très fortement sollicitée;

– elles sont de fabrication difficile car elles nécessitent l'introduction, dans la canalisation souple principale, soit de pièces métalliques d'ancrage dans le cas des solutions mécaniques, soit, pour les solutions de surmoulage, de noyaux internes dans la zone de branchement, afin d'assurer la contrepression indispensable lors de l'opération de surmoulage, puis leur extraction une fois l'opération terminée. Pour faciliter ces manipulations, les noyaux internes sont souvent enduits d'un agent lubrifiant, anti-collant du caoutchouc, qui peut contaminer la zone de surmoulage et nuire, ainsi, à la qualité de la liaison intime nécessaire entre le surmoulage et la surface extérieure de la canalisation souple. Par ailleurs, les opérations d'introduction et d'extraction des noyaux internes risquent de provoquer, sur la face interne des canalisations souples principale et secondaire, des blessures qui, même superficielles, créent des amorces de contraintes accélérant la déchéance desdites canalisations;

– elles sont coûteuses à mettre en œuvre, tant par la pose des inserts métalliques à l'intérieur de la canalisation souple dans le cas des solutions mécaniques, que par la nécessité de deux opérations successives, - l'injection du matériau de surmoulage sur la canalisation souple, puis sa vulcanisation sous pression, dans le moule, qui présente une durée de plusieurs minutes et mobilise, par conséquent, les outillages, dans le deuxième type de solutions;

- elles interdisent la pose de dérivation(s) de même diamètre que celui de la canalisation souple principale, en raison de la dimension nécessaire au passage de l'insert métallique ou du noyau interne; elles interdisent également, pour des raisons de difficulté d'accès, la pose de dérivations dans des zones éloignées de l'extrémité de la canalisation souple principale;

- dans le cas du surmoulage, elles raccourcissent la durée de vie de la canalisation principale en nécessitant un traitement thermique supplémentaire de la zone de branchement qui conduit à une survulcanisation du mélange à base de caoutchouc, donc à un affaiblissement des caractéristiques mécaniques et à une moindre résistance au vieillissement, dans les zones considérées.

- enfin, elles nécessitent un état de propreté parfait des zones à assembler et exigent donc l'emploi de solvants pour les raviver, ce qui nuit à la salubrité du poste de travail et crée des risques d'incendie ou d'explosion dans l'atelier.

L'analyse de l'art antérieur montre à l'évidence qu'un dispositif permettant de réaliser des raccordements, des branchements de dérivation ou de purges sur une canalisation souple, qui présente les caractéristiques de fiabilité nécessaire tout en étant économique sur le plan de la fabrication n'est pas connu.

Il faut, de plus, remarquer que l'évolution des technologies industrielles - celle de l'automobile, en particulier, - accroît, de manière considérable les contraintes de service dans les domaines de la température et de la pression, plus particulièrement.

L'invention a donc pour objectif la réalisation, - par des moyens de production moins coûteux et de meilleure salubrité - d'un dispositif de raccordement entre une canalisation souple et soit un embout rigide, soit une (ou plusieurs) dérivation(s), soit un système de purge, qui offre une garantie de fiabilité et de durabilité sous les sollicitations mécaniques, l'agressivité des fluides véhiculés et l'effet de l'environnement hostile, en évitant tout risque de fuite ou de déconnexion.

L'invention concerne donc un dispositif de raccordement qui est remarquable par l'obtention d'un effet de frettage des extrémités des parois de canalisations souples, dans la zone de raccordement, entre une tubulure rigide interne, soit droite soit en forme de té, de Y ou de croix, et un élément d'enveloppage externe, ledit frettage étant obtenu par le traitement thermique, sous pression, d'un matériau polymérique présentant une contraction au cours du refroidissement au moins égale à 1 % de son diamètre initial.

Pour simplifier l'exposé de l'invention, ledit matériau polymérique sera dénommé, par la suite, polymère rétractable.

Le procédé de réalisation du dispositif de raccordement comprend principalement, les étapes suivantes :
- les canalisations souples à raccorder sont montées sur les extrémités d'une tubulure interne présentant une forme appropriée,
- les extrémités des canalisations souples ainsi montées sont positionnées dans un moule, à température ambiante, que l'on clôt,
- le polymère rétractable est alors injecté dans le moule, par une machine d'usage courant dans l'industrie de transformation des polymères qui fonctionne à haute température et sous pression élevée,
- en pénétrant dans le moule, le polymère rétractable vient prendre la forme de l'empreinte du moule,
- en se refroidissant, le moulage ainsi obtenu diminue en diamètre, grâce aux propriétés thermiques du polymère rétractable, et vient fretter les parois des extrémités des canalisations souples sur la tubulure interne rigide.

Les trois dernières phases de l'opération durent, environ, 20 à 60 secondes.
- l'ensemble constitué des canalisations souples et du dispositif de raccordement est démoulé, la contraction se poursuivant lentement avec l'abaissement de la température pour se stabiliser définitivement au bout de 24 heures, à peu près.

En ce qui concerne le produit ainsi fabriqué, ledit dispositif est composé d'une tubulure interne, rigide, résistant à la pression et à la température mises en jeu dans le procédé et d'un élément d'enveloppage externe, constitué d'une matière polymérique rétractable qui assure un frettage de la paroi des canalisations souples sur ladite tubulure interne.

Les caractéristiques et variantes de l'invention seront mieux comprises à la lecture de la description accompagnant les dessins, dans lesquels:

- la figure 1 schématise, sur un graphique, l'évolution de la température et de la contraction du polymère rétractable;
- la figure 2 représente des variantes de réalisation de la tubulure interne du dispositif de raccordement;

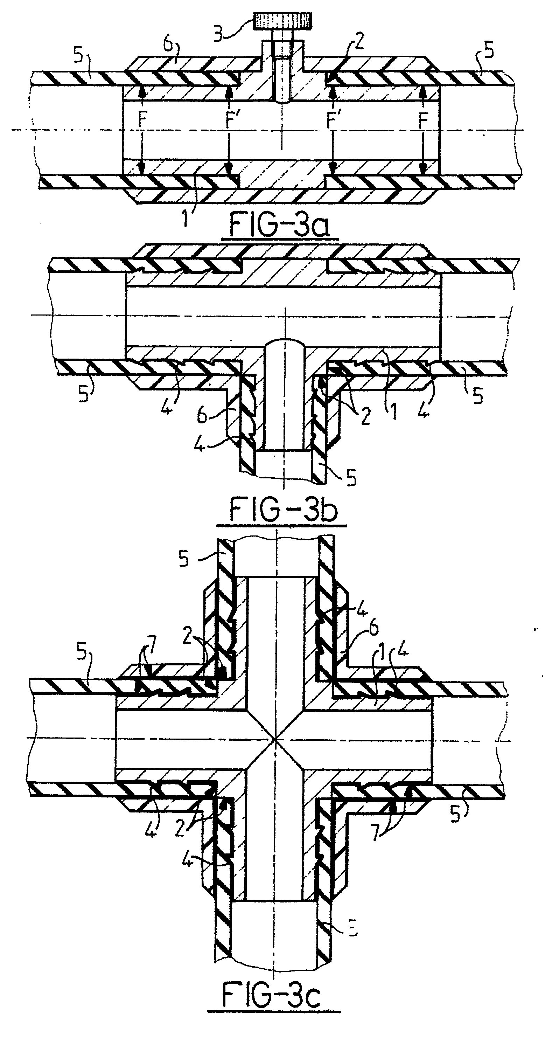

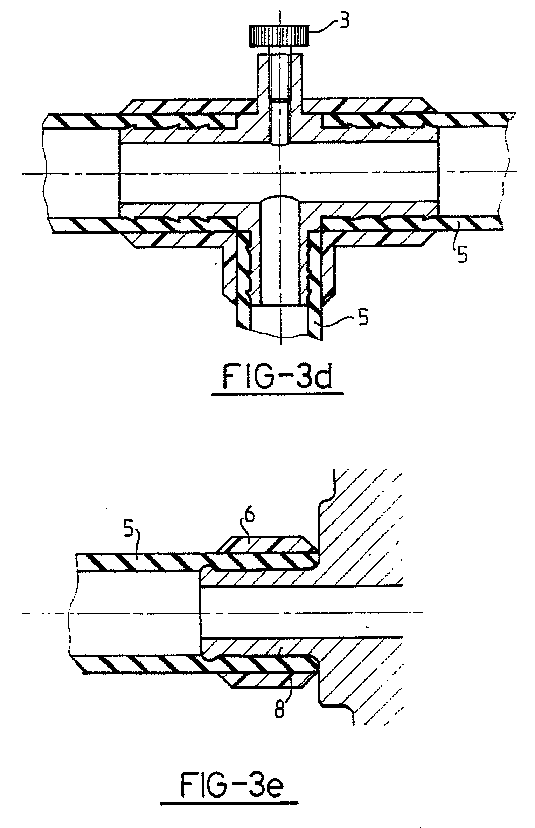

- la figure 3 illustre différentes applications du dispositif de raccordement.

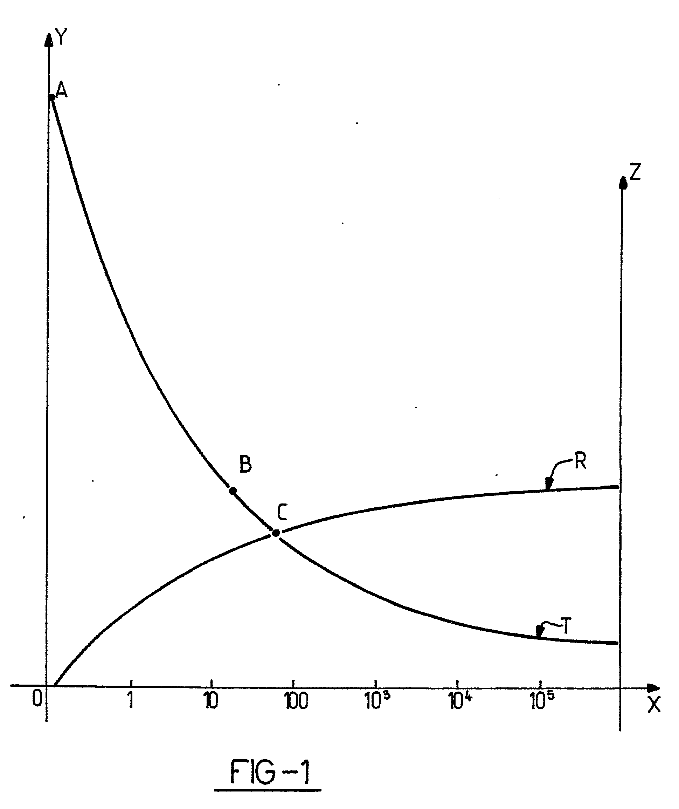

Sur la figure 1, dont le but est d'expliciter le procédé de réalisation, l'abcisse OX représente le temps, en secondes, sur une échelle logarithmique, l'ordonnée OY représente la température de la matière et l'axe OZ représente la contraction relative du matériau.

La courbe T figure donc les variations de la température du polymère rétractable en fonction du temps.

A titre d'exemple, le procédé de réalisation sera décrit pour l'injection d'un polyamide technique ce qui permet de préciser quelques ordres de grandeur, mais il est évident pour le polymériste que d'autres matériaux présentant une possibilité de rétraction thermique supérieure à 1 % pourraient être utilisés.

Dans le cas du polyamide technique, la température au point A, moment de l'injection est de 270°C, mais, comme la masse fondue pénètre dans le moule froid, la température de la matière s'abaisse rapidement jusqu'à environ 120°C, au point B, soit environ 30 secondes plus tard et vers 100°C, au point C, 45 à 60 secondes après le début de l'injection.

Dans le même temps, comme le montre le courbe R, la contraction du polymère rétractable qui se solidifie passe de 0 à 1 ou 2 % entre le point O et le point C où ladite courbe R tend vers une assymptote, l'évolution entre cette valeur C et la contraction stabilisée, au bout de 24 heures, étant très faible.

Sur le plan de la simplicité et de l'économie du procédé, la durée de l'opération entre la fermeture du moule - contenant les extrémités des canalisations souples avec le dispositif de raccordement - et le démoulage de l'ensemble est inférieure à 1 minute. Cette durée sera avantageusement comparée au procédé de surmoulage de caoutchouc, dans lequel la durée des opérations d'injection et de vulcanisation est de 3 à 6 minutes.

L'économie d'énergie et le gain sur l'immobilisation (donc le nombre) des outillages est considérable.

De plus, les opérations de perçage de la canalisation souple principale, d'introduction et d'extraction des noyaux internes primaire (dans la canalisation souple principale) et secondaire (dans l'élément raccordé) sont éliminées comme le sont, d'ailleurs, les opérations de nettoyage et de ravivage par des solvants.

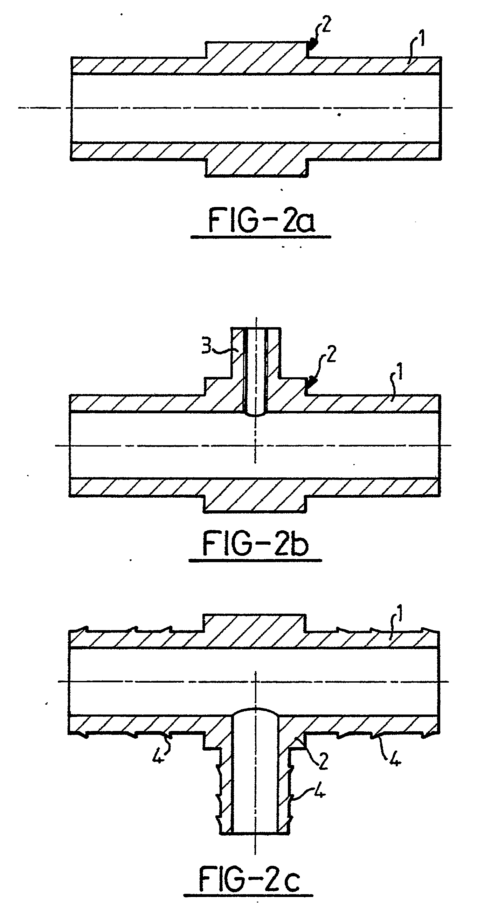

La figure 2 représente, à titre d'exemples non limitatifs, quelques variantes de réalisation de la tubulure interne (1) qui peut être constituée de n'importe quel matériau rigide - métallique, composite ou en matière plastique - capable de supporter, sans déformation, la pression et la température mises en jeu dans le procédé.

La vue 2a montre une tubulure interne (1), droite, pour le raccordement, en ligne, de deux canalisations souples (ici de mêmes diamètres), constituées de mélanges à base de caoutchouc de formulations identiques ou différentes. Ladite tubulure interne (1) comporte une collerette (2) servant de butée aux extrémités des canalisations souples qui y seront montées et permettant ainsi de s'assurer qu'elles sont bien engagées sur la longueur désirée.

La vue 2b représente une tubulure interne (1), droite, comportant un dispositif de purge (3) qui permet le raccordement en ligne de deux canalisations souples (ici de mêmes diamètres) constituées de mélanges à base de caoutchouc de formulations identiques ou différentes. Ladite tubulure interne (1), droite, avec dispositif de purge (3) est munie, dans sa partie centrale d'une collerette (2) de butée des extrémités des canalisations souples du même type que celle de la vue 2a.

La vue 2c concrétise la réalisation d'une dérivation simple qui utilise unt tubulure (1), en té, permettant le raccordement d'une canalisation souple (ici prévue d'un diamètre inférieur à celui de la canalisation principale), sur une canalisation principale. Ladite tubulure interne (1), en té, est munie de cannelures circonférentielles (4) qui favorisent l'accrochage mécanique des canalisations principales ou de la dérivation sur ladite tubulure interne (1). Le nombre, la forme, la profondeur et la disposition desdites cannelures (4) sont bien évidemment adaptables en fonction des modules des mélanges à base de caoutchouc, renforcés ou non, qui constituent les canalisations souples raccordées, pour assurer la meilleure liaison mécanique.

Les tubulures internes rigides (1) peuvent prendre des formes plus complexes (non représentées) - telles que Y pour réaliser une dérivation simple non perpendiculaire à la canalisation souple principale ou X pour réaliser des dérivations multiples - et peuvent être munies ou non des cannelures (4) et de la collerette (2).

Pour améliorer encore la fiabilité du raccordement, il est possible d'utiliser une liaison adhésive entre la tubulure interne (1) et les extrémités des canalisations souples principales ou de dérivation qui y sont montées.

La vue 3 illustre différentes applications du dispositif de raccordement objet de l'invention.

La vue 3a montre l'utilisation à un simple dispositif de purge. Les canalisations souples (ici de même diamètre) (5) sont montées aux extrémités de la tubulure droite (1) comportant le dispositif de purge (3), jusqu'à venir buter sur la collerette (2).

Après mise en place, par le procédé d'injection du polymère rétractable précédemment décrit, de l'élément d'enveloppage externe (6), la contraction dudit polymère rétractable vient assurer le frettage de la paroi des canalisations souples (5) dans les zones FF', en comprimant ladite paroi entre la tubulure interne rigide (1) et l'élément d'enveloppage externe (6).

La vue 3b montre l'application du dispositif de raccordement à la réalisation d'une dérivation simple. Les canalisations souples principales et de dérivation (5) sont montées sur les branches correspondantes de la tubulure interne rigide (1), en té jusqu'à venir buter sur les collerettes (2).

L'élément d'enveloppage externe (6) est alors moulé dans les conditions décrites précédemment pour venir fretter les parois des extrémités des canalisations souples (5) contre la tubulure interne rigide (1). Dans la réalisation illustrée, ladite tubulure interne (1), en té, comporte des cannelures (4) améliorant la liaison mécanique avec les extrémités des canalisations souples (5) principales et de dérivation.

La vue 3c montre l'application du dispositif de raccordement à une dérivation multiple. Les extrémités des canalisations souples principales et de dérivation (5) sont montées jusqu'à la collerette (2) des différentes branches de la tubulure interne rigide (1), en forme de X qui comporte des cannelures (4) de liaison mécanique. Comme dans les vues précédentes, l'élément d'enveloppage externe (6) vient alors fretter les parois des extrémités des canalisations souples (5) contre la tubulure interne rigide (1).

Dans la variante illustrée, il a été ajouté un adhésif (7) entre la tubulure interne rigide (1), en X, et le revêtement interne des extrémités des canalisations souples (5), ainsi qu'un adhésif (7) entre l'élément d'enveloppage externe (6) et le revêtement extérieur des extrémités des canalisations souples (5), ledit adhésif pouvant être identique en composition ou différent, selon la nature des mélanges à base de caoutchouc qui constituent les canalisations souples.

La vue 3d illustre, de la même manière, l'application du dispositif de raccordement au montage, dans la même zone, d'une dérivation et d'un dispositif de purge (3).

La vue 3e représente un dispositif de raccordement d'une canalisation souple (5) sur l'embout (8), généralement métallique, d'un appareil ou d'un organe de moteur, ledit embout (8) devant, évidemment être démontable pour être inséré dans le moule avec l'extrémité de la canalisation souple (5), car il tient le rôle de tubulure interne.

Il est évident, pour l'homme de l'art, que les différentes variantes précédemment décrites telles que la présence des cannelures (4), de la collerette (2), l'utilisation d'adhésif (7) entre le revêtement interne des extrémités des canalisations souples (5) et la tubulure interne (1) et/ou entre le revêtement externe des extrémités desdites canalisations souples (5) et l'élément extérieur d'enveloppage (6) peuvent être utilisées de manière isolée ou en combinaison sur les différentes formes de raccordement et de branchement simples ou multiples.

En conclusion, le dispositif de branchement et/ou de raccordement objet de l'invention il offre les avantages suivants :
- il autorise la réalisation de dérivations ou la pose de systèmes de purge dans des zones même éloignées de l'extrémité de la canalisation souple,
- il permet le branchement de dérivations même si les diamètres sont égaux à ceux des canalisations souples principales,
- il permet de placer le système de purge dans la zone même de la dérivation,
- il offre la possibilité de raccorder des canalisations souples, principales ou de dérivation, réalisées dans des matériaux de natures différentes, par exemple pour résister à des environnements d'agressivités différentes tels que chaleur et huile ou graisses, par exemple. Il est évident pour le formulateur de mélanges à base de caoutchouc qu'un optimum technico-économique ne peut être atteint par l'emploi d'un mélange unique devant satisfaire, dans des zones voisines, aux contraintes thermiques, dynamiques et chimiques. Mais le polymériste sait aussi que tous les matériaux ne sont pas compatibles entre eux et qu'il est parfois impossible d'assurer une liaison adhésive fiable entre deux mélanges. L'utilisation du dispositif de raccordement objet de l'invention apporte alors une solution à ce problème,
- il agit comme un ensemble de colliers de serrage multiple des parois de canalisations souples sur une tubulure rigide, mais sans possibilité de glissement et contribue, de ce fait, à la sécurité des branchements sur les machines ou les organes du moteur,
- il apporte, par la qualité du matériau et du fini de surface un élément d'esthétique que n'offre pas l'aspect de consolidation, plus ou moins efficace, des dispositifs antérieurs,
– enfin, et surtout, il présente un caractère de fiabilité non atteint jusque là, même sans interposition d'adhésif entre les canalisations souples et, d'une part la tubulure interne et/ou, d'autre part, l'élément d'enveloppage externe. En effet, des essais ont permis de mettre en évidence qu'une force d'arrachement de plus de 80 daN était nécessaire, à température ambiante, pour séparer une canalisation d'un diamètre de 20 millimètres, non adhérisée, du dispositif de raccordement.

**Revendications**

1. Dispositif de raccordement et/ou de branchement de canalisations souples de circuits de fluides comprenant une tubulure interne rigide (1) sur laquelle sont montées les extrémités desdites canalisations couples (5) et un élément d'enveloppage externe (6) en un matériau polymérique appliqué par moulage à injection, caractérisé en ce que ledit élément d'enveloppage externe (6) consiste en un polymère dont la contraction au cours du refroidissement est au moins égale à 1% de son diamètre initial pour fretter les parois des extrémités desdites canalisations souples (5) entre ladite tubulure interne rigide (1) et l'élément d'enveloppage externe (6).

2. Dispositif de raccordement et/ou de branchement de canalisation souples, selon la revendication 1, caractérisé en ce que la tubulure rigide interne (1) est munie de cannelures (4) destinées à accroître le frettage des parois des extrémités de canalisations souples (5) par un accrochage mécanique.

3. Dispositif de raccordement et/ou de branchement de canalisations souples, selon l'une des revendications 1 ou 2, caractérisé en ce que le frettage des parois des extrémités de canalisations souples (5) entre la tubulure interne rigide (1) et l'élément d'enveloppage externe (6) est renforcé par l'emploi d'un adhésif (7) disposé entre le revêtement intérieur des extrémités des canalisations souples (5) et ladite tubulure interne (1).

4. Dispositif de raccordement et/ou de branchement de canalisations souples, selon l'une des revendications 1 à 3, caractérisé en ce que le frettage des parois des extrémités de canalisations souples (5) entre la tubulure interne rigide (1) et l'élément d'enveloppage externe (6) est renforcé par l'emploi d'un adhésif (7) disposé entre le revêtement extérieur des extrémités des canalisations souples (5) et ledit élément d'enveloppage externe (6).

5. Dispositif de raccordement et/ou de branchement de canalisations souples, selon l'une des revendications 1 à 4, caractérisé en ce que le matériau polymérique constitutif de l'élément d'enveloppage externe, susceptible de se contracter d'au moins 1% de son diamètre initial au cours du refroidissement, est un polyamide 6–6.

6. Dispositif de raccordement et/ou de branchement de canalisations souples, selon l'une des revendications 1 à 5, caractérisé en ce que la tubulure interne (1) est réalisée dans un matériau composite résistant à la pression à des températures supérieures à 200°C.

7. Dispositif de raccordement et/ou de branchement de canalisations souples, selon l'une des revendications 1 à 5, caractérisé en e que la tubulure interne (1) est réalisée en polyamide 6–6 renforcée de fibres de verre courtes.

**Claims**

1. Device for the connection and/or branching of flexible pipes of circuits of circuits of fluids comprising an internal rigid tube (1) on which are mounted the ends of the said flexible pipes (5) and an external covering element made from a polymeric material applied by injection moulding, characterized in that the said external covering element (6) consists of a polymer, the contraction of which in the course of cooling is at least equal to 1% of its initial diamester, to compress the walls of the ends of the said flexible pipes (5) between the said inernal rigid tube (1) and the external covering element (6).

2. Device for the connection and/or branching of flexible pipes, according to claim 1, characterized in that the rigid internal tube (1) is provided with ribs (4) intended to increase the compression of the walls of the ends of flexible pipes (5) by a mechanical attachment.

3. Device for the connection and/or branching of flexible pipes, according to one of claims 1 or 2, characterized in that the compression of the walls of the ends of flexible pipes (5) between the internal rigid tube (1) and the external covering element (6) is reinforced by the use of an adhesive composition (7) inserted between the inernal liner of the ends of the flexible pipes (5) and the said internal tube (1).

4. Device for the connection and/or branching of flexible pipes, according to one of claims 1 to 3, characterized in that the compression of the walls of the ends of flexible pipes (5) between the internal rigid tube (1) and the external covering element (6) is reinforced by the use of an adhesive composition (7) inserted between the outer cover of the ends of the flexible pipes (5) and the said external covering element (6).

5. Device for the connection and/or branching of flexible pipes, according to one of Claims 1 to 4, characterized in that the polymeric material constituting the external covering element, which is capable of shrinking by at least 1% of its initial diameter in the course of cooling, is a 6–6 polyamide.

6. Device for the connection and/or branching of flexible pipes, according to one of Claims 1 to 5, characterized in that the internal tube (1) is made from a composite material which is resistant to pressure at temperatures higher than 200°C.

7. Device for the connection and/or branching of flexible pipe, according to one of claims 1 to 5, characterized in that the internal tube (1) is made from 6–6 polyamide reinforced with short glass fibres.

## Patentansprüche

1. Vorrichtung für die Verbindung und/oder Abzweigung für biegsame Fluidrohrleitungen mit einem starren Innenrohr (1), auf das die Enden der biegsamen Rohrleitungen (5) montiert sind und mit einem durch Spritzguß aufgebrachten äußeren Hüllelement (6) aus Polymermaterial, dadurch gekennzeichnet, daß das äußere Hüllelement (6) aus einem Polymer besteht, dessen Abkühlungs-Kontraktion mindestens 1% seines Ausgangsdurchmessers beträgt, um so sie Wandungen der Enden der biegsamen Rohrleitungen (5) zwischen dem starren Innenrohr (1) und dem äußeren Hüllelement (6) durch Aufschrumpfen festzulegen.

2. Vorrichtung für die Verbindung und/oder Abzweigung für biegsame Rohrleitungen nach Anspruch 1, dadurch gekennzeichnet, daß das starre Innenrohr (1) mit Kannelierungen (4) zum Erhöhen der Aufschrumpfkräfte auf die Wandungen der Enden der biegsamen Rohrleitungen (5) durch mechanisches Verhaken versehen ist.

3. Vorrichtung für die Verbindung und/oder Abzweigung für biegsame Rohrleitungen nach Anspruch 1 oder 2, dadurch gekennzeichnet, daß die Festlegung der Wandungen der Enden der biegsamen Rohrleitungen (5) durch Aufschrumpfen zwischen dem starren Innenrohr (1) und dem äußeren Hüllelement (6) durch die Verwendung eines Klebers (7) verstärkt ist, der zwischen der Innenauskleidung der Enden der biegsamen Rohrleitungen (5) und dem Innenrohr (1) aufgebracht ist.

4. Vorrichtung für die Verbindung und/oder Abzweigung für biegsame Rohrleitungen nach einem der Ansprüche 1 bis 3, dadurch gekennzeichnet, daß die Festlegung der Wandungen der Enden der biegsamen Rohrleitungen (5) durch Aufschrumpfen zwischen dem starren Innenrohr (1) und dem äußeren Hüllelement (6) durch die Verwendung eines Klebers (7) verstärkt ist, der zwischen dem Außenmantel der Enden der biegsamen Rohrleitungen (5) und dem äußeren Hüllelement (6) aufgebracht ist.

5. Vorrichtung für die Verbindung und/oder Abzweigung für biegsame Rohrleitungen nach einem der Ansprüche 1 bis 4, dadurch gekennzeichnet, daß das Polymermaterial, aus dem das äußere Hüllelement besteht und dessen Abkühlungs-Kontraktion mindestens 1% seines Ausgangsdurchmessers beträgt, ein Polyamid 6–6 ist.

6. Vorrichtung für die Verbindung und/oder Abzweigung für biegsame Rohrleitungen nach einem der Ansprüche 1 bis 5, dadurch gekennzeichnet, daß das Innenrohr (1) aus einem Kompositmaterial besteht, das bei Temperaturen über 200°C druckfest ist.

7. Vorrichtung für die Verbindung und/oder Abzweigung von biegsamen Rohrleitungen nach einem der Ansprüche 1 bis 5, dadurch gekennzeichnet, daß das Innenrohr (1) aus mit kurzen Glasfasern verstärktem Polyamid 6–6 besteht.

FIG -1

FIG-2a

FIG-2b

FIG-2c

FIG-3a

FIG-3b

FIG-3c

FIG-3d

FIG-3e